(19) Europäisches Patentamt
European Patent Office
Office européen des brevets

(11) **EP 3 136 559 B1**

(12) **EUROPEAN PATENT SPECIFICATION**

(45) Date of publication and mention
of the grant of the patent:
**06.10.2021  Bulletin 2021/40**

(51) Int Cl.:
***H02K 29/03*** *(2006.01)*    *H02K 21/16* *(2006.01)*
***H02K 1/27*** *(2006.01)*

(21) Application number: **14889998.2**

(22) Date of filing: **31.12.2014**

(86) International application number:
**PCT/CN2014/095792**

(87) International publication number:
**WO 2015/161668 (29.10.2015 Gazette 2015/43)**

(54) **PERMANENT MAGNET SYNCHRONOUS MOTOR AND ROTOR THEREOF**

PERMANENTMAGNETSYNCHRONMOTOR UND ROTOR DAFÜR

MOTEUR SYNCHRONE À AIMANT PERMANENT ET SON ROTOR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.04.2014  CN 201410168537**

(43) Date of publication of application:
**01.03.2017  Bulletin 2017/09**

(73) Proprietor: **United Automotive Electronic Systems
Co., Ltd.
Pudong New Area
Shanghai 201206 (CN)**

(72) Inventors:
• **HUANG, Wenxiang**
  **Shanghai 201206 (CN)**
• **HAN, Ming**
  **Shanghai 201206 (CN)**
• **BAO, Jie**
  **Shanghai 201206 (CN)**
• **KONG, Yongjin**
  **Shanghai 201206 (CN)**
• **JIANG, Daqian**
  **Shanghai 201206 (CN)**
• **CHEN, Yihui**
  **Shanghai 201206 (CN)**
• **SHI, Jia**
  **Shanghai 201206 (CN)**

(74) Representative: **Hynell Intellectual Property AB
Kabyssgatan 4D
120 30 Stockholm (SE)**

(56) References cited:
WO-A1-2010/013444    WO-A1-2013/026088
CN-A- 101 421 905    CN-A- 102 355 071
CN-A- 103 956 872    CN-U- 202 260 721
DE-A1-102013 213 554    JP-A- 2011 239 609
US-A1- 2002 047 432    US-A1- 2004 041 483
US-A1- 2004 041 483    US-A1- 2008 224 558
US-A1- 2013 320 798    US-A1- 2014 062 254

## Description

## Field of Invention

The present invention relates to a motor, and relates in particular to a permanent magnet synchronous motor and a rotor thereof.

## Background Art

A permanent magnet synchronous motor features high torque density, high power density, and a wide high efficiency area, and is a first choice of driving motors for new energy vehicles as hybrid, pure electric and fuel cell cars. Particularly for a permanent magnet synchronous motor with an interior permanent magnet, reluctance torque due to saliency effects of the rotor can be made use of to further increase its toque and expand its speed adjustable range, so as to increase its rotating speed. On the other hand, a permanent magnet rotor comes with it cogging torque, and in addition to the effects of nonlinear magnetic circuits due to magnetic saturation, it has rich back EMF harmonic content, thus its torque ripple under load condition is more serious than a common asynchronous motor or a permanent magnet motor with surface permanent magnet. All these further result in NVH (noise, vibration, harshness), which is a discomfort for passengers to be solved.

A solution of prior art in diminishing torque ripple by effectively reducing back EMF harmonic wave and cogging torque is to select a reasonable pole and slot combination. For example, majority of driving motors for vehicles as represented by Toyota Prius adopt a plan with 48 slots for the stator and 8 poles for the rotor, while ISG motors represented by Honda IMA adopt a plan of concentrated winding with a slot-pole ratio of 3:2.

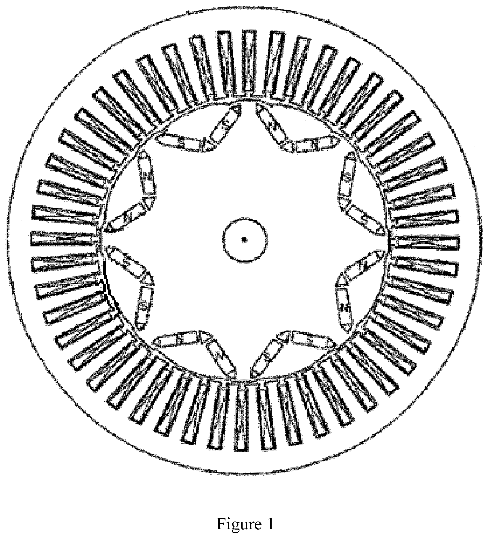

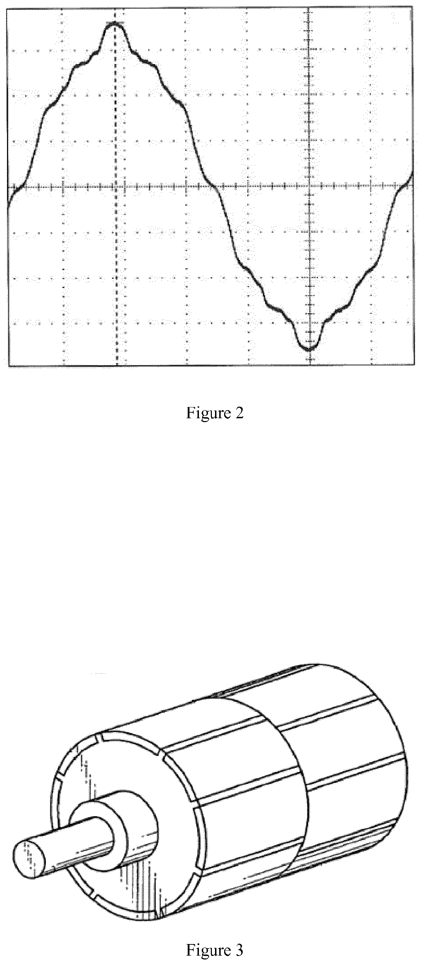

Figure 1 shows a permanent magnet synchronous motor with 48 slots and 8 poles for the Toyota Prius, which exhibits rich harmonic content in its back EMF waveform since neither the stator nor the rotor is skewed, as is shown on Figure 2, resulting not only in increased iron loss, in precision error in determination of the rotor angle during calibration, but also in apparent accompanied cogging torque and torque ripple.

Another solution of prior art in effectively reducing harmonic content, cogging torque, and torque ripple is to eliminate harmonic content and cogging torque by means of skewed stator slots or rotor step skewing, so as to reduce torque ripple. The solution in its working principle is equivalent to multiple axially superimposed motors, with the sum of cogging torque of all the motors approaching zero and the back EMF harmonic waves cancelling each other. However, there exist the following defects:

> 1. Rotator skewed slot or rotor step skewing requires positioning tools for stack mounting stator lamination or rotor lamination, which will increase equipment cost and decrease production efficiency.
> 2. Stators for the rotator skewed slot solution become more difficult to roll off the assembly line, while the effective length of the winding coils increases correspondingly, resulting in consumption of more copper wires.
> 3. Rotor step skewing results in a shortened distance between opposite magnetic poles of neighboring magnetic poles, leading to weakened output capacity of the motor, with a more significant reduced capacity particularly for over skewed rotors.
> 4. Peak torque and peak power for a same motor with complete rotator skewed slot or rotor step skewing decreases 10%, tantamount to 10% increase of magnet consumption in order to attain the original capacity. Currently, magnet for permanent magnet synchronous motors is made principally of neodymium iron boron and makes up for 50% of cost for the whole motor due to the effect of rare earth pricing, thus is sensitive for the product economic performance.
> 5. Number of steps≧3 for rotor step skewing does not result in a substantial reduction in cogging torque or torque ripple, that is to say, as long as the number of steps is not infinite, the effect for the rotator skewed slot cannot be obtained, with certain cogging torque unable to be reduced by means of the rotor step skewing method.
> 6. For an ISG with a motor of shorter axial length or less number of slots, it is difficult to realize rotator skewed slot or rotor step skewing. And further, a substantial percentage thereof is effected by end leakage flux, with cogging torque resulted therefrom being unable to be reduced effectively by either rotator skewed slot or rotor step skewing.
> 7. Both rotator skewed slot and rotor step skewing produce a cyclic axial force on the rotor, resulting in increased probability of failed bearing, shortened product life, and increased-axis NVH.

A permanent magnet synchronous motor with rotor step skewing employed for the Nissan LEAF is shown on Figure 3, which substantially improves back EMF waveform, reduces both cogging torque and torque ripple. However, the motor's peak capacity is wakened, and manufacturing of the rotor get more complex.

Further, from US 2014/062254 and JP 2011239609 there are known permanent magnet rotating electrical machines presenting the features in the pre-characterizing portion of the independent claims.

## Summary of the Invention

The technical problem the present invention aims to solve is to provide a permanent magnet synchronous motor and a rotor thereof for reducing cogging torque and torque ripple in low torque area, which has a simple structure and low cost and is easy to manufacture.

To solve the aforementioned technical problem, the present invention provides a permanent magnet synchronous motor comprising a rotor according to claim 1.

Preferably, a q-axis surface groove is arranged on an outer surface along the axis of the iron core in the middle in-between the pair of the adjacent S pole magnet plate and the N pole magnet plate.

Preferably, a stator of the fractional slot concentrated winding permanent magnet synchronous motor has 24 stator teeth and around the axis of the iron core are internally arranged 8 S pole magnet plates and 8 N pole magnet plates alternatively and evenly.

Preferably, an open width of the d-axis surface groove is 50% to 150% of a width of a tooth shoe of the stator tooth of the permanent magnet synchronous motor, a depth of the d-axis surface groove is 20% to 80% of an air gap and the inter-axis distance of the two d-axis surface grooves of each magnet plates is 90%, 100% or 110% of the tooth tip span of the stator tooth of the permanent magnet synchronous motor.

Preferably, the d-axis surface groove is in a minor arc shape.

The permanent magnet synchronous motor of the present invention increases fundamental component percentage in a cycle of air gap flux density, reduces back EMF harmonic content in the flux density waveform, that is to say, the air gap flux density has a low sinusoidal distortion. The magnetic field of the motor without power supply is provided solely by the magnet plates with the torque generated by the rotor being related only to the flux density magnitude and the magnetic permeability, thus cogging torque is diminished if the flux density waveform is sinusoidal in a linear condition. The permanent magnet synchronous motor of the present invention reduces cogging torque resulting from air gap flux density waveform distortion due to stator slotting, thus reduces level of torque ripple of the motor under load, particularly for the torque ripple in a low torque area. Moreover, the permanent magnet synchronous motor of the present invention has a simple rotor structure and low cost and is easy to manufacture.

**Brief Description of the Drawings**

The drawings the present invention depends on are hereunder briefly described in order to clearly expound on the technical solution of the present invention.

Figure 1 is a schematic diagram of a permanent magnet synchronous motor of prior art with 48 slots and 8 poles;
Figure 2 is a schematic diagram of the back EMF waveform of the permanent magnet synchronous motor shown on Figure 1;
Figure 3 is a schematic diagram of a permanent magnet synchronous motor of prior art with a step skewing rotor;
Figure 4 is a schematic diagram of a first example of the rotor of the permanent magnet synchronous motor of the present invention;
Figure 5 is a schematic diagram of a second example of the rotor of the permanent magnet synchronous motor of the present invention;
Figure 6 is a schematic diagram of an embodiment of the rotor of the permanent magnet synchronous motor of the present invention;
Figure 7 depicts a width of a tooth shoe and an air gap;
Figure 8A is a schematic diagram of the back EMF of a permanent magnet synchronous motor with an untreated rotor;
Figure 8B is a schematic diagram of the cogging torque of a permanent magnet synchronous motor with an untreated rotor;
Figure 8C is a schematic diagram of the torque ripple of a permanent magnet synchronous motor with an untreated rotor;
Figure 9A is a schematic diagram of the back EMF of a permanent magnet synchronous motor with a q-axis surface groove and a q-axis internal hole arranged on the rotor iron core thereof;
Figure 9B is a schematic diagram of the cogging torque of a permanent magnet synchronous motor with a q-axis surface groove and a q-axis internal hole arranged on the rotor iron core thereof;
Figure 9C is a schematic diagram of the torque ripple of a permanent magnet synchronous motor with a q-axis surface groove and a q-axis internal hole arranged on the rotor iron core thereof;
Figure 10A is a schematic diagram of the back EMF of a permanent magnet synchronous motor with a q-axis surface groove and a d-axis surface groove arranged on the rotor iron core thereof;
Figure 10B is a schematic diagram of the cogging torque of a permanent magnet synchronous motor with a q-axis surface groove and a d-axis surface groove arranged on the rotor iron core thereof;
Figure 10C is a schematic diagram of the torque ripple of a permanent magnet synchronous motor with a q-axis surface groove and a d-axis surface groove arranged on the rotor iron core thereof;
Figure 11A is a schematic diagram of the back EMF of a permanent magnet synchronous motor with a q-axis surface groove, a q-axis internal hole, and a d-axis surface groove arranged on the rotor iron core thereof;
Figure 11B is a schematic diagram of the cogging torque of a permanent magnet synchronous motor with a q-axis surface groove, a q-axis internal hole, and a d-axis surface groove arranged on the rotor iron core thereof;
Figure 11C is a schematic diagram of the torque ripple of a permanent magnet synchronous motor with a q-axis surface groove, a q-axis internal hole, and a d-axis surface groove arranged on the rotor iron core thereof;

Figure 12 is a schematic diagram showing air gap flux density magnitude respectively with and without a q-axis surface grove.

Embodiment

In combination with the drawings hereunder provided, the technical solution of the present invention will be clearly described in its entirety. Based on the embodiment of the present invention, a person of the art is able to deduce other embodiments without creative work, which shall fall within the scope of protection of the present invention, which is defined by the appended claims.

Example one not covered by the invention

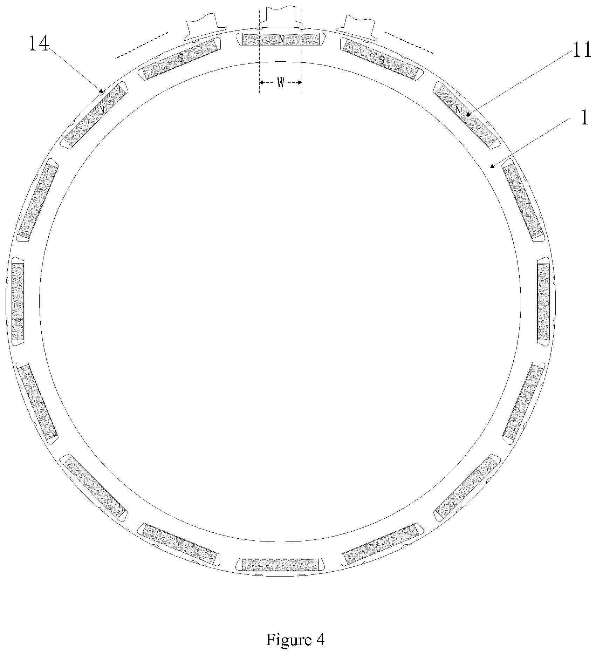

A a permanent magnet synchronous motor, a rotor thereof is shown on Figure 4, comprises an iron core 1;
The iron core 1 is in cylindrical form, with p S pole magnet plates 11 and p N pole magnet plates 11 arranged inside of the iron core around an axis thereof, wherein p is a positive integer, and the p S pole magnet plates and the p N pole magnet plates are alternatively aligned;
on a surface of a rotor iron core of each magnet plate are arranged two d-axis surface grooves 14;
the two d-axis surface grooves 14 corresponding to each magnet plate are situated on two sides of a center line (that is , a d axis) of the magnet plate;
an inter-axis distance of the two d-axis surface grooves 14 of each magnet plates is approximately equal to a tooth tip span w of the stator tooth of the permanent magnet synchronous motor, i.e. 90% to 110% of the tooth tip span w of the stator tooth of the permanent magnet synchronous motor, and can be 90%, 100%, or 110% of the tooth tip span w of the stator tooth of the permanent magnet synchronous motor.

Cogging torque results from a tangential component of an uneven interacting force between a permanent magnet body of the permanent magnet synchronous motor and the stator teeth of a slotted stator. The cogging torque $T_{cog}$, ignoring saturation effect of the iron core, is represented as

$$T_{cog} = \frac{\pi Z L_a}{4\mu_0} \cdot \left(R_2^2 - R_1^2\right) \sum_{n=1}^{\infty} n G_n B_{r\frac{nZ}{2p}} \sin nZ\alpha$$

,

wherein Z is the number of the stator teeth, $L_a$ is an axial length of the iron core, $\mu_0$ is a constant, $R_1$ is an inner diameter of the corresponding air gap, $R_2$ is an outer diameter of the corresponding air gap, $G_n$ is a coefficient for the corresponding air gap permeance, Br is magnetic flux density generated by the permanent magnet along a circumference of the air gap, $\alpha$ is an angle between the center line (d axis) of the permanent magnet body and a center line of the stator tooth, n is a positive integer such that nZ/2p is an integer. As can be inferred from the above expression, only a magnetic flux density component with nZ/2p order can generate cogging torque, and so it is possible to reduce cogging torque by means of reducing the magnitude of the magnetic flux density Br with order nZ/2p.

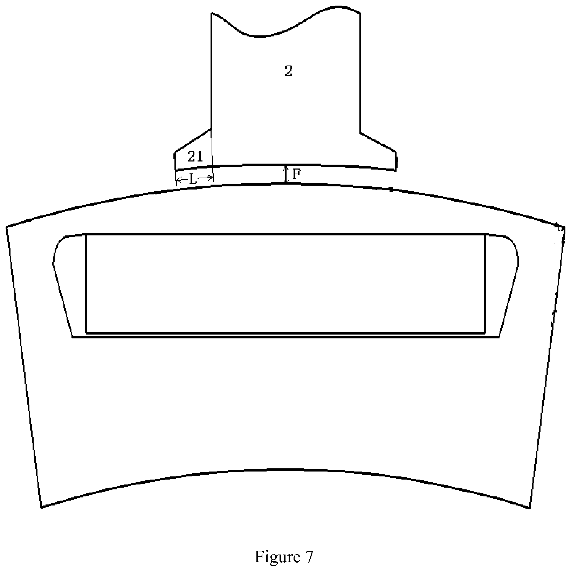

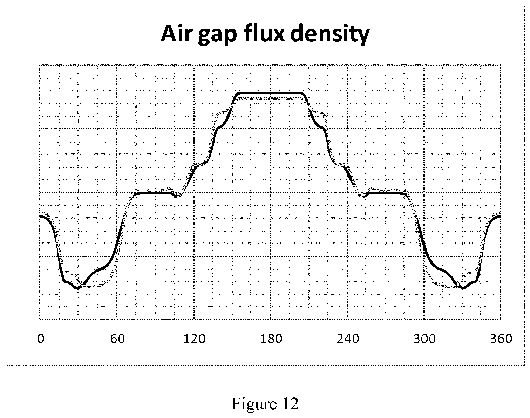

For the permanent magnet synchronous motor of example one, on the surface of the rotor iron core of each magnet plate are arranged two d-axis surface grooves 14, wherein the inter-axis distance of the two d-axis surface grooves 14 of each magnet plates is approximately equal to the tooth tip span w of the stator tooth of the permanent magnet synchronous motor. As such, and as are shown on Figure 4 and Figure 7, in the case the center line of the stator tooth agrees with the d axis, the axial line of the two d-axis surface grooves corresponding to each magnet plate is located on a shoe tip of the tooth shoe 21 of the stator tooth, thus a drastic change of the air gap flux density magnitude is prevented, reducing magnitude of the flux density back EMF harmonic waveform, and according to a theoretical analysis of the cogging torque expression, the cogging torque will reduce correspondingly. As is shown on Figure 12 (wherein the light color curve line and the deep color curve line respectively correspond to the pre-slotting and post-slotting air gap flux density), magnitude of the low-order harmonic in the back EMF is drastically reduced.

The permanent magnet synchronous motor of example one increases fundamental component percentage in a cycle of air gap flux density, reduces back EMF harmonic content in the flux density waveform, that is to say, the air gap flux density has a low sinusoidal distortion. The magnetic field of the motor without power supply is provided solely by the magnet plates with the torque generated by the rotor being related only to the flux density magnitude and the magnetic permeability, thus cogging torque is diminished if the flux density waveform is sinusoidal in a linear condition. The permanent magnet synchronous motor of example one reduces cogging torque resulting from air gap flux density waveform distortion due to stator slotting, thus reducing level of torque ripple of the motor under load. Since cogging torque represents a large percentage of torque ripple in a low torque area, torque ripple is drastically reduced if cogging torque is low. Moreover, the permanent magnet synchronous motor of example one has a simple rotor structure and low cost, and is easy to manufacture.

Preferably, as is shown on Figure 7, the open width of the d-axis surface groove 14 is 50% to 150% (for example, 50%, 100%, or 150%) of the width L of the tooth shoe 21 of the stator tooth 2 of the permanent magnet synchronous motor, the depth of the d-axis surface groove 14 is 20% to 80% (for example, 20%, 50%, or 80%) of the air gap F. As is mentioned previously, the air gap flux density comprises a constant component, a fundamental component, and a harmonic component, with the fundamental component solely contributing to the performance of the motor. An even change in air gap results in a larger fundamental component of the air gap flux density, while the open width of the d-axis surface groove 14 between 50% to 150% of the width L of the tooth shoe 21 of the stator tooth 2 of the permanent magnet synchronous motor and the depth of the d-axis surface groove 14 between 20% to 80% of the air gap F result in an even change of air gap flux density from the d axis to the q axis, and thus harmonic effect due to slotting of the d-axis surface grooves 14 is reduced.

Preferably, the d-axis surface groove 14 is in a minor arc shape. The d-axis surface grooves 14 in a minor arc shape will further mitigate drastic change of the air gap flux density due to stator slotting, thus reducing drastic change in air gap flux density magnitude. Further, such axial surface grooves affect mechanical strength of the rotor in a minor manner, and thus the rotor is easier to manufacture.

Example two not covered by the invention

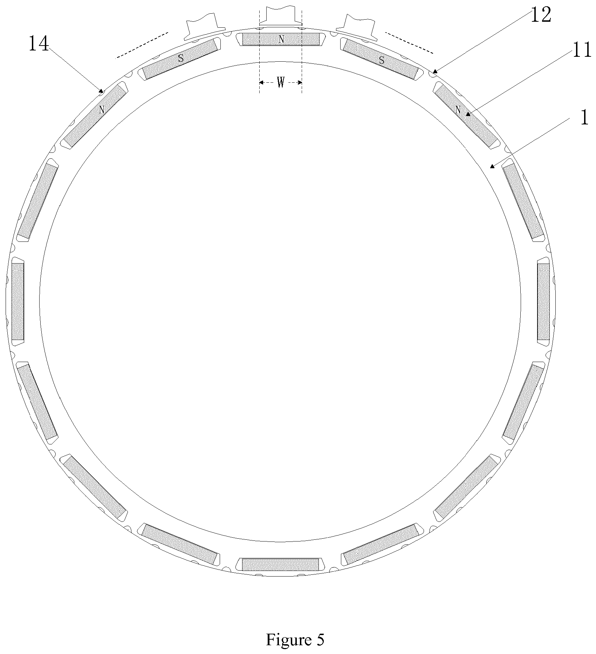

Example two is based on the permanent magnet synchronous motor of example one, the permanent magnet synchronous motor being a fractional slot motor, as is shown on Figure 5, with a q-axis surface groove 12 being arranged on an outer surface along the axis of the iron core in the middle (that is, the locus of the q axis) in-between the pair of the adjacent S pole magnet plate and the N pole magnet plate.

The average torque of a permanent magnet synchronous motor is $T = p[\emptyset_f i_q + (L_d - L_q )i_d i_q]$, wherein p is a number of pole pairs of the motor, $\phi_f$ is flux generated by a fundamental magnetic field of the permanent magnet boy on the stator coils, id is d-axis current of the stator, Ld is d-axis inductance of the stator winding coils, Lq is q-axis inductance of the stator winding coils. The torque T of the permanent magnet synchronous motor is constituted principally of two parts, a synchronous torque generated by the permanent magnet flux (caused by excitation magnetic field of the permanent magnet material and the d-axis current), and a reluctance torque induced by inequality between the d-axis inductance Ld and the q-axis inductance Lq due to asymmetry of a d-axis magnetic circuit with a q-axis magnetic circuit, with the reluctance torque being capable of increasing the torque/current density of the permanent magnet motor on one hand and substantially increasing torque ripple on the other hand.

As for a fractional slot motor (that is, a motor whose slot number per pole per phase is a fraction

$$T = \frac{Z}{2pm} = b + \frac{j}{k}$$

, wherein p is a number of pole pairs of the motor, m is a number of phase, Z is a number of stator teeth, b, j, and k are positive integers, with K>j), the reluctance torque induced by inequality between the d-axis inductance Ld and the q-axis inductance Lq due to asymmetry of a d-axis magnetic circuit with a q-axis magnetic circuit only constitutes a small percentage, it is generally possible to substantially reduce the torque ripple by means of altering the shape of the q-axis magnetic circuit, with a total torque unchanged.

Slotting on the surface of the d axis reduces cogging torque and torque ripple in the low torque area, while in the high torque area, the corresponding current is comparatively large, and thus torque ripple due to reluctance torque constitutes a large percentage. Therefore, slotting on the q axis, via changing the parameter Lq, substantially improves torque ripple in the medium and high torque areas under an operating load. The permanent magnet synchronous motor of example two is a fractional slot motor with d-axis surface grooves and q-axis surface grooves arranged on the surface of the rotor iron core. It not only reduces cogging torque caused by distortion of air gap flux density waveform due to stator slotting and torque ripple in the low torque area, but also substantially reduces torque ripple of the motor under the operating load, particularly that in the medium and high torque area, with the total torque basically unchanged, by means of changing the shape of the q-axis magnetic circuit via slotting on the locus of the q axis on the rotor iron core surface.

The permanent magnet synchronous motor is a fractional slot concentrated winding permanent magnet synchronous motor, with a slot number per pole per phase greater than or equal to 1/4 and less than or equal to 1/2. Concentrated winding features advantages of a shortened end connection, reduced wire consumption, lower resistance of winding coils, reduced copper consumption, elevated motor efficiency, reduced cost, and shortened manufacturing cycle. Since a fractional slot concentrated winding permanent magnet synchronous motor has a winding pitch y=1, when Z/p falls within 3/2 and 3, that is, the slot number per pole per phase is greater than or equal to 1/4 and less than or equal to 1/2, the two coil side induced electromotive forces of a same coil differ by approximately 180°, and a comparatively higher winding coefficient is obtained.

Preferably, the stator of the fractional slot concentrated winding permanent magnet synchronous motor has 24 stator teeth (Z=24), with only one coil wound around each stator tooth; around the axis of the iron core are internally arranged 8 S pole magnet plates and 8 N pole magnet plates alternatively and evenly (8 pairs of rotor magnetic poles, p=8, altogether 2p poles), and thus the slot number per pole per phase is

$$T = \frac{Z}{2pm} = \frac{24}{2*8*3} = \frac{1}{2}$$

.

Embodiment

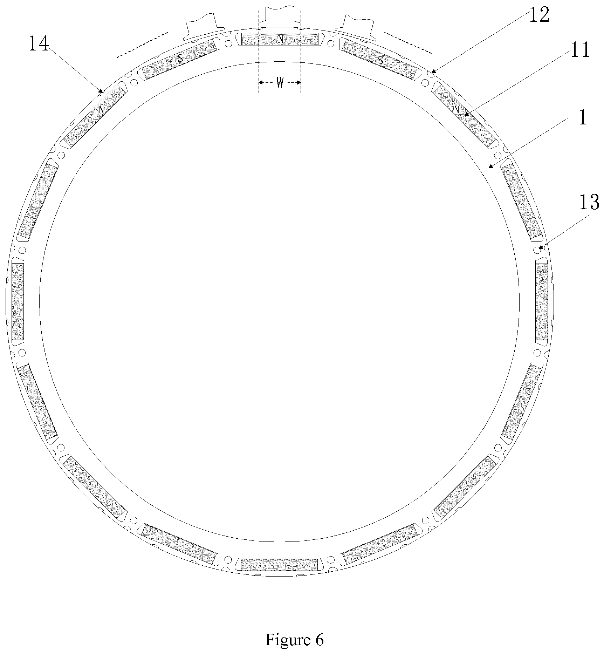

The embodiment is based on the permanent magnet synchronous motor of example two, as is shown on Figure 6, and shows that a permanent magnet synchronous motor according to the invention is arranged with an internal hole 13 further arranged at the middle (that is, the locus of the q axis) in-between the adjacent S pole magnet plate and the N pole magnet plate of the iron core 1 internally along the axis thereof.

Slotting on the surface of the d axis reduces cogging torque and torque ripple in the low torque area, while in the high torque area, the corresponding current is comparatively large, and thus torque ripple due to reluctance torque constitutes a large percentage. Therefore, slotting on the q axis, via changing the parameter Lq, substantially improves torque ripple in the medium and high torque areas under an operating load.

Opening a hole internally on the q axis of the iron core not only reduces torque ripple due to saliency effect of the motor, but is also tantamount to a narrowed q-axis magnetic bridge, thus increasing magnetic field saturation at the locus, decreasing pole-pole leakage, and is equivalent to increasing the flux of the permanent magnet, that is, increasing magnet steel efficiency of the motor; moreover, opening a hole on the q axis of the iron core increases magnetoresistance of the q-axis magnetic circuit, and strengthens the anti-demagnetization of the magnetic steel, since a d-axis flux weakening reversed field entering the magnet steel is weakened under a same stator current.

Hence, opening a hole on the q axis of the iron core, and with two d-axis surface grooves 14 arranged symmetric to the d axis on the surface of the rotor core of each magnet plate, reduces torque ripple due to saliency effect of the motor; it further curtails pole-pole leakage and increases magnet steel efficiency; it strengthens the anti-demagnetization of the magnetic steel, since a d-axis flux weakening reversed field entering the magnet steel is weakened under a same stator current; it reduces cogging torque and torque ripple in the whole area under an operating load, and achieves effect of step skewing.

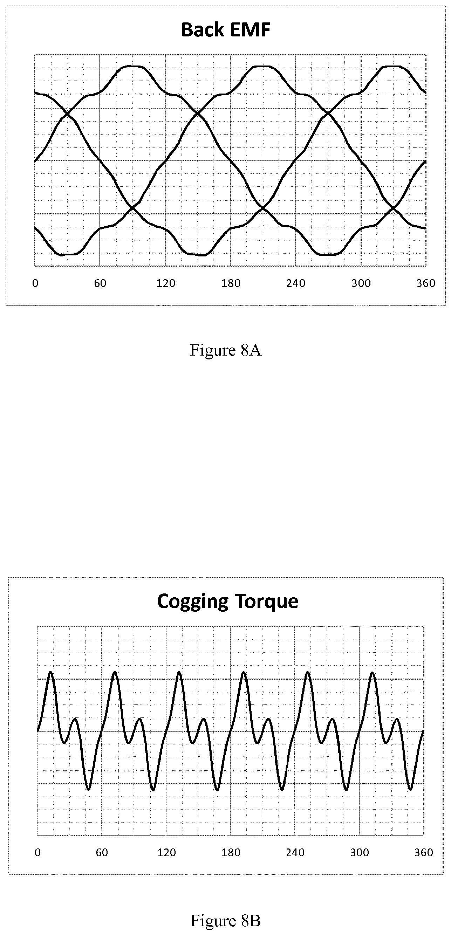

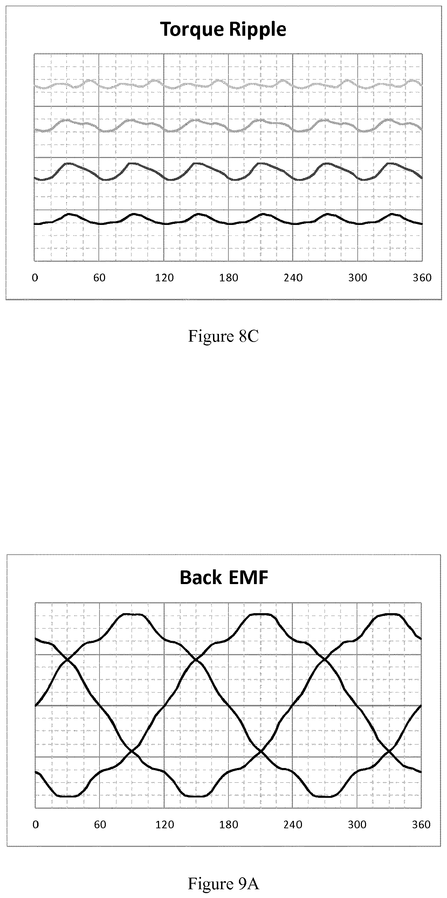

The back EMF of a permanent magnet synchronous motor with an untreated rotor not forming part of the invention is shown on Figure 8A, the cogging torque of the permanent magnet synchronous motor with an untreated rotor is shown on Figure 8B, and the torque ripple of the permanent magnet synchronous motor with an untreated rotor is shown on Figure 8C.

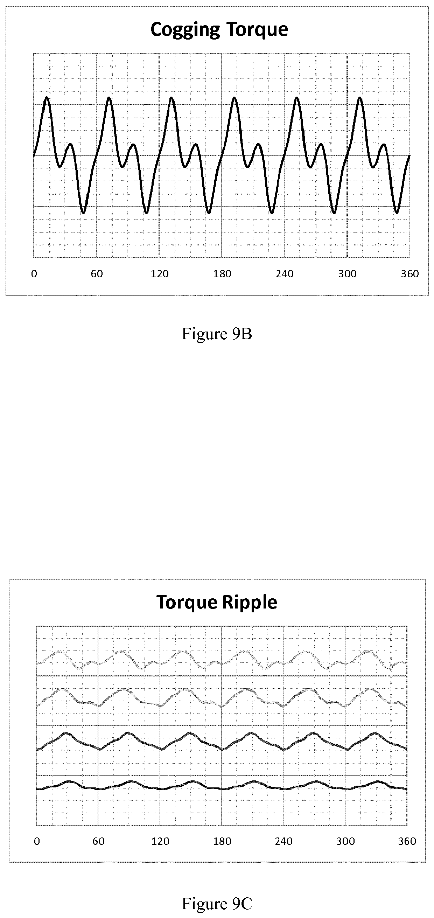

The back EMF of a permanent magnet synchronous motor with a q-axis surface groove and a q-axis internal hole arranged on the rotor iron core thereof according to the invention is shown on Figure 9A, the cogging torque thereof is shown on Figure 9B, and the torque ripple thereof is shown on Figure 9C.

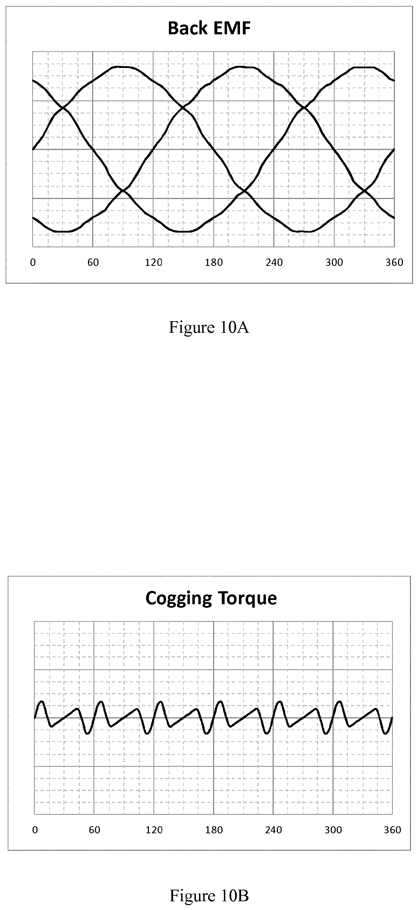

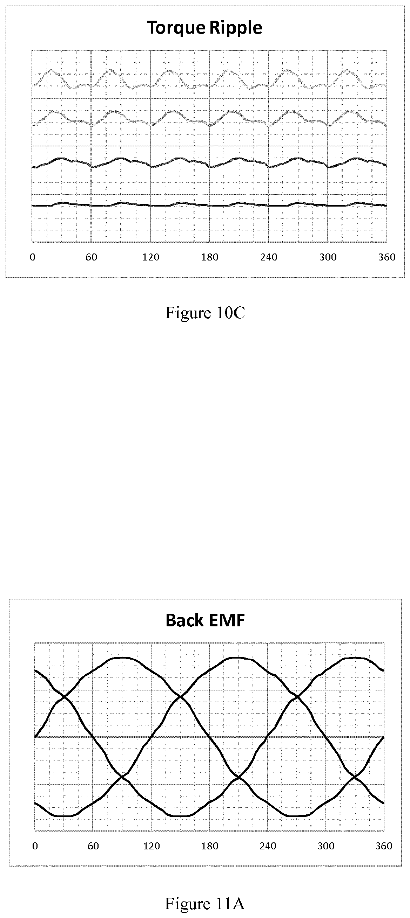

The back EMF of a permanent magnet synchronous motor not forming part of the invention, with a q-axis surface groove and a d-axis surface groove arranged on the rotor iron core thereof is shown on Figure 10A, the cogging torque thereof is shown on Figure 10B, and the torque ripple thereof is shown on Figure 10C.

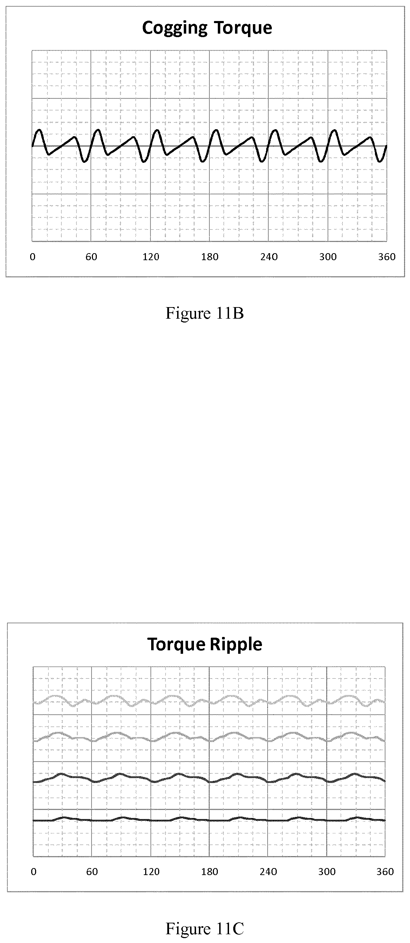

The back EMF of a permanent magnet synchronous motor with a q-axis surface groove, a q-axis internal hole, and a tooth shoe groove arranged on the rotor iron core thereof according to a preferred embodiment of the invention is shown on Figure 11A, the cogging torque thereof is shown on Figure 11B, and the torque ripple thereof is shown on Figure 11C.

**Claims**

1. A permanent magnet synchronous motor comprising a rotor, wherein the rotor comprises an iron core (1) in cylindrical form, with p S pole permanent magnet plates and p N pole permanent magnet plates (11) arranged inside of the iron core around an axis thereof, wherein p is a positive integer, and the p S pole permanent magnet plates (11) and the p N pole permanent magnet plates (11) are arranged with alternate polarity in the circumferential direction; wherein on a surface of a rotor iron core corresponding to each permanent magnet plate (11) are arranged two axial d-axis surface grooves (14); the two axial d-axis surface grooves corresponding to each permanent magnet plate (11) are situated on two sides of an axial center line of the permanent magnet plate; a circumferential distance of the two d-axis surface grooves of each permanent magnet plate (11) is 90% to 110% of a tooth tip span (W) of a stator tooth (2) of the permanent magnet synchronous motor, **characterized in that** an internal hole (13) is arranged internally along the axis of the iron core in-between each pair of the adjacent S pole magnet plate and the N pole magnet plate, wherein the permanent magnet synchronous motor is a fractional slot concentrated winding permanent magnet synchronous motor, a slot number per pole per phase is greater than or equal to 1/4 and is less than or equal to 1/2.

2. The permanent magnet synchronous motor of claim 1, wherein, in the rotor, an axial q-axis surface groove (12) is arranged on an outer surface along the axis of the iron core (1) in the middle in-between the pair of the adjacent S pole permanent magnet plate and the N pole permanent magnet plate.

3. The permanent magnet synchronous motor of claim 1, wherein the motor has 24 stator teeth, and around the axis of the iron core (1) are internally arranged 8 S pole and 8 N pole permanent magnet plates (11) alternatively and evenly.

4. The permanent magnet synchronous motor of claim 1, wherein an open width of the d-axis surface groove is 50% to 150% of a width of a tooth shoe (21) of the stator tooth (2) of the permanent magnet synchronous motor, a depth of the axial d-axis surface groove is 20% to 80% of an air gap, and the inter-axis distance of the two axial d-axis surface grooves (14) of each permanent magnet plate (11) is 90%, 100%, or 110% of the tooth tip span (W) of the stator tooth of the permanent magnet synchronous motor.

5. The permanent magnet synchronous motor of claim 1, wherein the axial d-axis surface groove (14) is in a minor arc shape.

**Patentansprüche**

1. Permanentmagnet-Synchronmotor, umfassend einen Rotor, wobei der Rotor einen Eisenkern (1) in zylindrischer Form mit p S-Pol-Permanentmagnetplatten und p N-Pol-Permanentmagnetplatten (11) umfasst, die in dem Eisenkern um eine Achse davon angeordnet sind, wobei p eine positive ganze Zahl ist, und wobei die p S-Pol-Permanentmagnetplatten (11) und die p N-Pol-Permanentmagnetplatten (11) mit wechselnder Polarität in der Umfangsrichtung angeordnet sind; wobei auf einer Oberfläche eines Rotoreisenkerns entsprechend jeder Permanentmagnetplatte (11) zwei axiale d-Achsen-Oberflächennuten (14) angeordnet sind; wobei die zwei axialen d-Achsen-Oberflächennuten, entsprechend jeder Permanentmagnetplatte (11), auf zwei Seiten einer axialen Mittellinie der Permanentmagnetplatte liegen; wobei ein Umfangsabstand der zwei d-Achsen-Oberflächennuten jeder Permanentmagnetplatte (11) 90 % bis 110 % einer Zahnspitzenspannweite (W) eines Stator-Zahns (2) des Permanentmagnet-Synchronmotors beträgt, **gekennzeichnet dadurch, dass** ein inneres Loch (13) innen entlang der Achse des Eisenkerns zwischen jedem Paar der benachbarten S-Pol-Magnetplatte und der N-Pol-Magnetplatte angeordnet ist, wobei der Permanentmagnet-Synchronmotor ein Permanentmagnet-Synchronmotor mit bruchlochkonzentrierter Wicklung ist, wobei eine Lochanzahl pro Pol pro Phase größer oder gleich 1/4 ist und kleiner oder gleich 1/2 ist.

2. Permanentmagnet-Synchronmotor nach Anspruch 1, wobei in dem Rotor an einer äußeren Oberfläche entlang der Achse des Eisenkerns (1) in der Mitte zwischen dem Paar der benachbarten S-Pol-Permanentmagnetplatte und der N-Pol-Permanentmagnetplatte eine axiale q-Achsen-Oberflächennut (12) angeordnet ist.

3. Permanentmagnet-Synchronmotor nach Anspruch 1, wobei der Motor 24 Stator-Zähne aufweist und wobei um die Achse des Eisenkerns (1) intern 8 S-Pol- und 8 N-Pol-Permanentmagnetplatten (11) abwechselnd und gleichmäßig angeordnet sind.

4. Permanentmagnet-Synchronmotor nach Anspruch 1, wobei eine offene Breite der d-Achsen-Oberflächennut 50 % bis 150 % einer Breite eines Zahn-Schuhs (21) des Stator-Zahns (2) des Permanentmagnet-Synchronmotors beträgt, eine Tiefe der d-Achsen-Oberflächennut 20 % bis 80 % eines Luftspalts beträgt, und der Abstand zwischen den Achsen der zwei axialen d-Achsen-Oberflächennuten (14) von jeder Permanentmagnetplatte (11) 90 %, 100 % oder 110 % der Zahnspitzenspannweite (W) des Stator-Zahns des Permanentmagnet-Synchronmotors beträgt.

5. Permanentmagnet-Synchronmotor nach Anspruch 1, wobei die axiale d-Achsen-Oberflächennut (14) eine geringfügige Bogenform hat.

**Revendications**

1. Un moteur synchrone à aimants permanents comprenant un rotor, le rotor comprenant un noyau de fer (1) de forme cylindrique, avec p plaques d'aimant permanent à pôle S et p plaques d'aimant permanent (11) à pôle N disposées à l'intérieur du noyau de fer autour d'un axe de celui-ci, p étant un nombre entier positif, et les p plaques (11) d'aimant permanent à pôle S et les p plaques (11) d'aimant permanent à pôle N étant agencées avec une polarité alternée dans la direction circonférentielle ; sur une surface d'un noyau de fer formant rotor qui correspond à chaque plaque (11) d'aimant permanent sont agencées deux rainures de surface axiales d'axe d (14); les deux rainures de surface axiales d'axe d correspondant à chaque plaque (11) d'aimant permanent sont situées sur les deux côtés d'une ligne centrale axiale de la plaque d'aimant permanent ; une distance circonférentielle des deux rainures de surface d'axe d de chaque plaque (11) d'aimant permanent représente de 90 % à 110 % d'une étendue (W) de pointe de dent d'une dent de stator (2) du moteur synchrone à aimants permanents, **caractérisé en ce qu'**un trou interne (13) est agencé intérieurement le long de l'axe du noyau de fer entre chaque paire de plaques d'aimants adjacentes à pôle S et à pôle N, le moteur synchrone à aimants permanents étant un moteur synchrone à aimants permanents à enroulement à fente fractionnaire concentré, un nombre d'emplacements par pôle par phase étant supérieur ou égal à 1/4 et inférieur ou égal à 1/2.

2. Le moteur synchrone à aimants permanents selon la revendication 1, dans lequel, dans le rotor, une rainure de surface axiale (12) d'axe q est agencée sur une surface extérieure le long de l'axe du noyau de fer (1) situé au milieu entre la paire de plaques d'aimants permanents à pôle S et à pôle N adjacentes.

3. Le moteur synchrone à aimants permanents selon la revendication 1, dans lequel le moteur a 24 dents de stator, et autour de l'axe du noyau de fer (1) sont agencées intérieurement 8 plaques (11) d'aimant permanent à pôles S et 8 à pôle N, de façon alternée et régulière.

4. Le moteur synchrone à aimants permanents selon la revendication 1, dans lequel une largeur ouverte de la rainure de surface d'axe d représente de 50 % à 150 % d'une largeur d'un sabot de dent (21) de la dent de stator (2) du moteur synchrone à aimants permanents, une profondeur de la rainure de surface axiale d'axe d représente de 20 % à 80 % d'un entrefer, et la distance inter-axes des deux rainures de surface axiales (14) d'axe d de chaque plaque (11) d'aimant permanent représente 90 %, 100 % ou 110 % de l'étendue (W) de pointe de dent de la dent de stator du moteur synchrone à aimants permanents.

5. Le moteur synchrone à aimants permanents selon la revendication 1, dans lequel la rainure de surface axiale (14) d'axe d est selon une forme d'arc mineur.

Figure 1

Figure 2

Figure 3

14

11

1

N

S

W

S

N

N

Figure 4

Figure 5

Figure 6

Figure 7

**Back EMF**

Figure 8A

**Cogging Torque**

Figure 8B

## Torque Ripple

Figure 8C

## Back EMF

Figure 9A

Figure 9B

Figure 9C

**Back EMF**

Figure 10A

**Cogging Torque**

Figure 10B

**Torque Ripple**

0   60   120   180   240   300   360

Figure 10C

**Back EMF**

0   60   120   180   240   300   360

Figure 11A

Figure 11B

Figure 11C

Figure 12

**EP 3 136 559 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014062254 A

- JP 2011239609 B